# DEMANDE DE BREVET EUROPEEN

(11) **EP 0 921 291 A1**
(43) Date de publication de la demande: **09.06.1999**
(21) Numéro de dépôt: 98403018.9
(22) Date de dépôt: 02.12.1998
(51) Int. Cl.: F02B 77/13, B60R 13/08, B60K 5/04

(54) **Dispositif d'encapsulage acoustique d'un groupe motopropulseur d'un véhicule automobile**

(30) Priorité: 02.12.1997 FR 9715138
(71) Demandeur: RENAULT, 92109 Boulogne-Billancourt (FR)
(72) Inventeur: Baudet, Bernard, 92500 Rueil Malmaison (FR); Davias, Mathieu, 78320 La Verriere (FR); Marionneau, Sylvaine, 78290 Croissy sur Seine (FR); Menager, Jean Luc, 92360 Meudon la Foret (FR); Samuel, Sébastien, 75004 Paris (FR)

(57) **Abrégé**

Dispositif d'encapsulage acoustique d'un groupe motopropulseur (5) d'un véhicule automobile disposé dans un compartiment (2) de ce véhicule et comprenant une multiplicité d'éléments fonctionnels sélectivements reliés par des moyens de liaison, comprenant un caisson d'isolation acoustique (20, 31, 49) dont la paroi entoure un premier ensemble (21) d'éléments fonctionnels dudit groupe, en particulier le bloc moteur, la boite de vitesses et le bloc de distribution et d'accessoires, de telle sorte qu'un second ensemble (22) d'autres éléments fonctionnels dudit groupe, en particulier le collecteur d'échappement et la ligne d'échappement, sont à l'extérieur dudit caisson, et présente des moyens de passage au travers desquels s'étendent les moyens de liaison des éléments fonctionnels dudit premier ensemble aux éléments fonctionnels dudit second ensemble, ainsi que des moyens (3b, 3c, 4) de guidage d'air permettant d'amener et de faire circuler de l'air de refroidissement autour d'au moins un élément fonctionnel (14) dudit second ensemble (22), extérieurement audit caisson.

## Description

La présente invention concerne un dispositif d'encaspulage acoustique d'un groupe motopropulseur d'un véhicule automobile.

Pour des questions de respect de normes et de confort des usagers et du voisinage, on cherche de plus en plus à réduire les bruits émis à l'intérieur de l'habitacle du véhicule et à l'extérieur de ce dernier.

Les principales sources de bruit émis par un véhicule sont le bruit issu du compartiment moteur, le bruit émis par la ligne d'échappement et les bruits de roulement sur le sol et d'aéraulique externe du véhicule.

En ce qui concerne la réduction du bruit issu du compartiment moteur, les solutions proposées jusqu'à ce jour consistent à munir le capot du compartiment moteur et les parois latérales de ce dernier d'une couche en un matériau acoustiquement absorbant et à prévoir en-dessous de ce compartiment moteur une courte paroi de protection, tout en permettant une ventilation totale du compartiment moteur. On a par ailleurs proposé d'intégrer les entrées d'air nécessaires au circuit de refroidissement dans le bouclier avant ou la calandre du compartiment moteur en y adjoignant éventuellement un clapet. Les solutions proposées jusqu'à ce jour ne sont cependant pas suffisantes.

La présente invention a pour objet un dispositif d'encapsulage acoustique d'un groupe motopropulseur d'un véhicule automobile qui permet de réduire le bruit émis par ce dernier tout en tenant compte des contraintes de température des différents éléments fonctionnels de ce groupe motopropulseur et de ses besoins liés au refroidissement nécessaire de certains de ces éléments fonctionnels.

Le dispositif d'encapsulage acoustique d'un groupe motopropulseur d'un véhicule automobile disposé dans un compartiment de ce véhicule et comprenant une multiplicité d'éléments fonctionnels sélectivements reliés par des moyens de liaison comprend selon l'invention un caisson dont la paroi entoure un premier ensemble d'éléments fonctionnels dudit groupe, de telle sorte qu'un second ensemble d'autres éléments fonctionnels dudit groupe sont à l'extérieur dudit caisson, et présente des moyens de passage au travers desquels s'étendent les moyens de liaison des éléments fonctionnels dudit premier ensemble aux éléments fonctionnels dudit second ensemble et comprend des moyens de guidage d'air permettant d'amener et de faire circuler de l'air de refroidissement autour d'au moins un élément fonctionnel dudit second ensemble, extérieurement audit caisson.

Selon l'invention, ledit premier ensemble comprend de préférence le bloc moteur, la boite de vitesses et le bloc de distribution et d'accessoires fixé au bloc moteur dudit groupe motopropulseur.

Selon l'invention, ledit second ensemble peut avantageusement comprendre le collecteur d'échappement dudit groupe et la ligne d'échappement qui lui est reliée, la paroi dudit caisson comprenant une cloison traversée par les moyens de liaison de ce collecteur d'échappement audit premier ensemble d'éléments fonctionnels, et que lesdits moyens de guidage d'air permettent d'amener et de faire circuler de l'air de refroidissement autour dudit collecteur d'échappement.

Selon l'invention, ledit second ensemble peut avantageusement comprendre le collecteur d'admission dudit groupe, la paroi dudit caisson comprenant une cloison traversée par les moyens de liaison de ce collecteur d'admission audit premier ensemble d'éléments fonctionnels, et que lesdits moyens de guidage d'air permettant d'amener et de faire circuler de l'air de refroidissement autour dudit collecteur d'admission.

Selon l'invention, ladite cloison peut avantageusement diviser ledit compartiment en deux parties dont l'une renferme ledit premier ensemble d'éléments fonctionnels et constitue ledit caisson et dont l'autre contient ledit second ensemble d'éléments fonctionnels.

Selon l'invention, une partie inférieure de la paroi dudit caisson peut avantageusement former une paroi inférieure dudit compartiment.

Selon l'invention, lesdits moyens de guidage d'air de refroidissement peuvent avantageusement comprendre au moins un passage ménagé au travers de ladite cloison et mettant en communication les deux parties précitées dudit compartiment, en amont dudit second ensemble d'éléments fonctionnels, la partie renfermant ledit premier ensemble d'éléments fonctionnels comprenant une ouverture de sortie d'air.

Selon l'invention, lesdits moyens de guidage d'air de refroidissement peuvent avantageusement comprendre des moyens de réglage ou de régulation de l'écoulement d'air au travers dudit passage de communication.

Selon l'invention, la paroi dudit caisson comprend de préférence une couche extérieure rigide et au moins une couche intérieure en un matériau acoustisuement isolant ou amortisseur.

Selon l'invention, lesdits moyens de passage peuvent avantageusement comprendre des moyens d'étanchéité acoustique.

La présente invention sera mieux comprise à l'étude de dispositifs d'encapsulage acoustique de groupes motopropulseurs de véhicules automobiles décrits à titre d'exemples non limitatifs et illustrés schématiquement par le dessin sur lequel :
- la figure 1 représente une vue de gauche d'un premier dispositif d'encapsulage selon la présente invention ;
- la figure 2 représente une vue arrière du dispositif de la figure 1 ;
- la figure 3 représente une vue de dessus du dispositif de la figure 1 ;
- la figure 4 représente une vue en perspective du dispositif de la figure 1 ;
- la figure 5 représente une vue en perspective d'un dispositif d'encapsulage constituant une variante améliorée du dispositif d'encapsulage acoustique des figures 1 à 4 ;
- la figure 6 représente une vue de côté du dispositif d'encapsulage de la figure 5 ;
- la figure 7 représente une vue en perspective du dispositif d'encapsulage de la figure 5, complété ;
- la figure 8 représente une vue de côté d'un autre dispositif d'encapsulage acoustique selon la présente invention ;
- la figure 9 représente une vue arrière du dispositif d'encapsulage de la figure 8 ;
- la figure 10 représente une vue de côté d'un autre dispositif d'encapsulage selon la présente invention ;
- la figure 11 représente une vue de dessus du dispositif d'encapsulage de la figure 10 ;
- la figure 12 représente une vue de côté d'un autre dispositif d'encapsulage selon la présente invention.

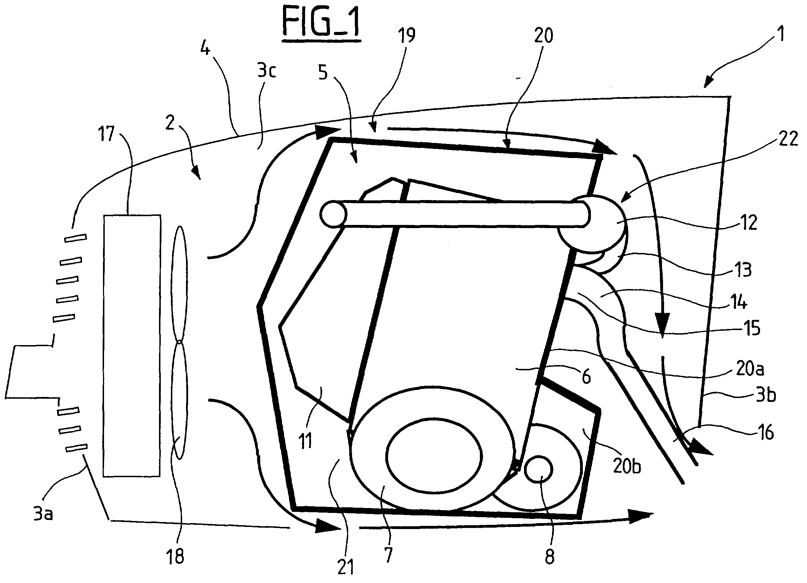

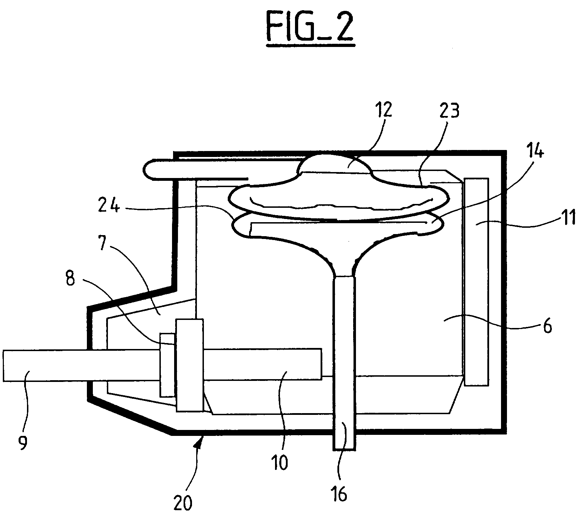

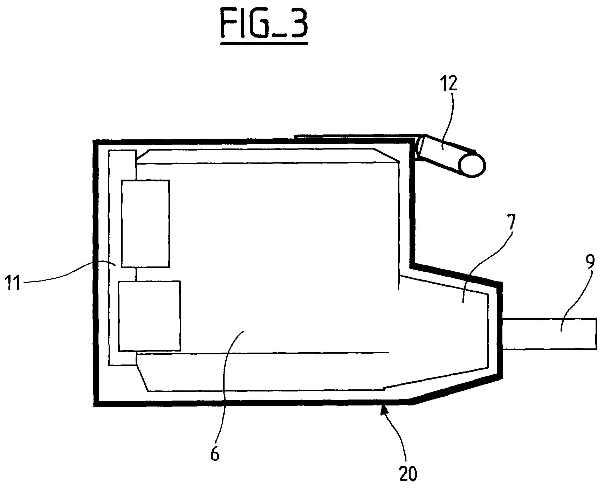

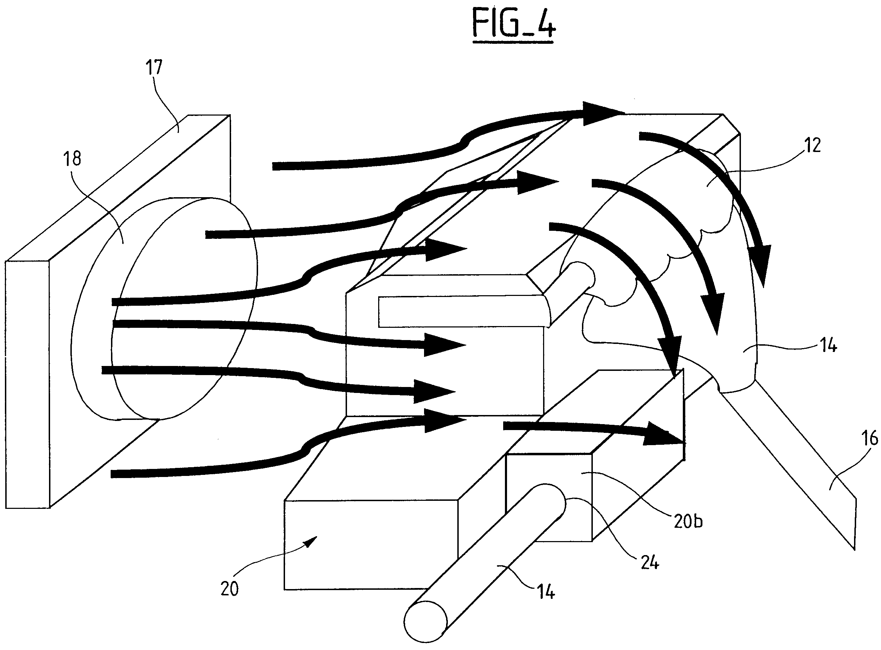

En se reportant aux figures 1 à 4, on voit qu'on a représenté la partie avant d'un véhicule 1 dans laquelle est déterminé un compartiment moteur 2 délimité latéralement par une paroi avant 3a incluant une calandre, une paroi arrière ou tablier 3b de séparation avec l'habitacle du véhicule et des flancs 3c de séparation avec les passages de roues et au-dessus par un capot relevable 4.

Dans ce compartiment 2 est disposé un groupe motopropulseur 5 qui comprend principalement un bloc moteur 6 incluant une culasse, monté en position transversale, une boîte de vitesses 7 disposée en-dessous du bloc moteur 6, une sortie de transmission 8 placée en arrière de la boîte de vitesses et comprenant deux arbres transversaux opposés 9 et 10 dirigés vers les roues avant du véhicule, un bloc 11 placé latéralement au bloc moteur 6 et incluant notamment le système de distribution et différents accessoires tels qu'un alternateur, un démarreur, une pompe de direction assistée et un compresseur de climatisation, et, en arrière du bloc moteur 6, un collecteur d'admission 12 relié à la face arrière du bloc moteur 6 par un conduit de liaison 13 et un collecteur d'échappement 14 qui est relié à la face arrière du bloc moteur 6 par un conduit de liaison 15 et qui se prolonge vers le bas et en dessous du véhicule par une ligne d'échappement 16.

Le groupe motopropulseur 5 comprend en outre, dans la partie avant du compartiment 2, un radiateur 17 associé à un ventilateur 18.

A l'intérieur du compartiment 2 est prévu un dispositif d'encapsulage acoustique 19 permettant de renfermer sélectivement certains éléments fonctionnels du groupe motopropulseur 5.

Le dispositif d'encapsulage 19 comprend, dans cet exemple, un caisson d'isolation acoustique 20 qui entoure ou enferme un premier ensemble 21 d'éléments fonctionnels du groupe motopropulseur 5, cet ensemble 21 étant constitué par le bloc moteur 6, la boîte de vitesses 7, la sortie de transmission 8 et le bloc de distribution et d'accessoires 11, de telle sorte qu'un second ensemble 22 d'éléments fonctionnels du groupe motopropulseur 5, constitué par le collecteur d'admission 12, le collecteur d'échappement 14, la ligne d'échappement 16, les arbres de transmission 9 et 10, le radiateur 17 et le ventilateur 18, est disposé à l'extérieur du caisson 20.

Pour celà, les conduits de liaison 13 et 15, reliant respectivement le collecteur d'admission 12 et le collecteur d'échappement 14 au bloc moteur 6, traversent la paroi arrière transversale 20a du caisson 20 par des passages 23 et 24. Les arbres de transmission 9 et 10 traversent des parois longitudinales 20b du caisson 20 par des passages 24. Le radiateur 17 et autres accessoires de circulation d'eau extérieurs au caisson 20 sont reliés à l'ensemble 21 à l'intérieur du caisson 20 par l'intermédiaire de durites non représentées qui traversent également la paroi du caisson 20 par des passages judicieusement placés. En outre, les autres accessoires secondaires et les fils de connexion électrique nécessaires traversent également la paroi du caisson 20 en des endroits judicieusement placés.

Il résulte de ce qui précède que l'ensemble 21 des éléments fonctionnels du groupe motopropulseur 5, qui constitue une source de bruit importante du compartiment moteur 2, sont confinés à l'intérieur du caisson d'isolation acoustique 20, sans crainte de conséquence thermique de ce confinement sur leur fonctionnement puisqu'ils sont refroidis par le circuit d'eau de refroidissement.

Par contre, les éléments très chauds constitués par le collecteur d'admission 3 et la ligne d'échappement 16 et l'élément sensible à la température constitué par le collecteur d'admission 12, appartenant à l'ensemble 22 précité du groupe motopropulseur 5, sont disposés à l'extérieur du caisson 20.

Il résulte également de ce qui précède que l'air de refroidissement traversant le radiateur 17 de l'ensemble 22 et activé par le ventilateur 18 s'écoule autour du caisson 20 en étant guidé par les parois du compartiment 2 et s'échappe de ce dernier par le bas. C'est ainsi que de l'air de refroidissement peut passer au-dessus et latéralement au caisson 20 pour pouvoir s'écouler en arrière du caisson 20, autour du collecteur d'admission 12 et autour du collecteur d'échappement 14 et du début de la ligne d'échappement 16 afin de les refroidir.

Par ailleurs, il convient d'observer que le caisson 20 est de préférence fixé par exemple au bloc moteur 6 afin de pouvoir suivre son mouvement par rapport à la caisse du véhicule. Bien entendu, les organes de fixation non représentés du bloc moteur 5 à la caisse du véhicule traversent également des passages non représentés de la paroi du caisson 20.

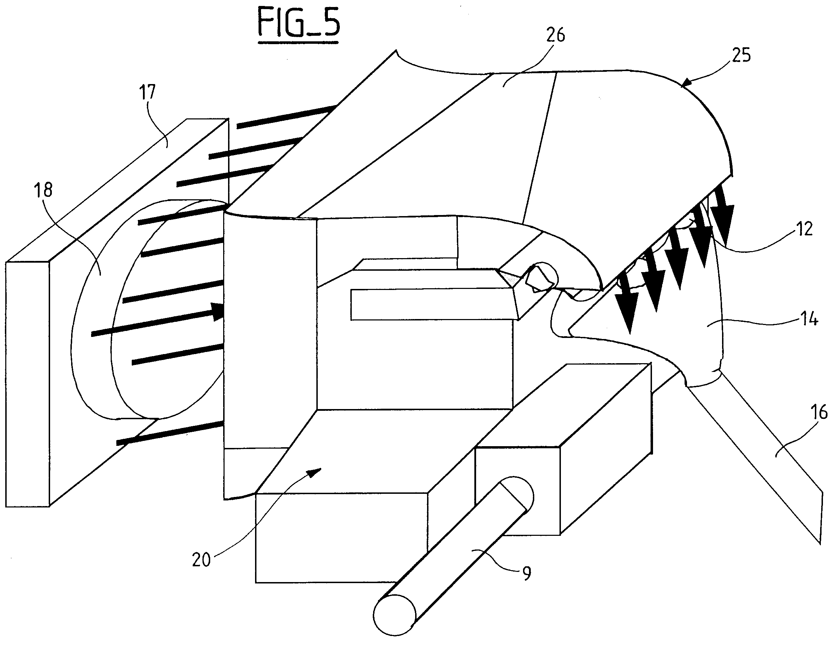

En se reportant maintenant à la figure 5, on voit que le dispositif d'encapsulage acoustique 19 décrit précédemment en référence aux figures 1 à 4 est complété par un carter 25 de guidage d'air de refroidissement de section en forme de U inversé qui recouvre à distance le caisson 20 de manière à guider l'air de refroidissement depuis l'avant du caisson 20 jusqu'à l'arrière de ce dernier.

La partie arrière de la paroi supérieure 26 du carter 25 est incurvée vers le bas de manière à dévier le courant d'air vers le bas afin que l'air de refroidissement circule vers le bas autour du collecteur d'admission 12 puis du collecteur d'échappement 14 pour s'échapper par la partie inférieure arrière du compartiment 2.

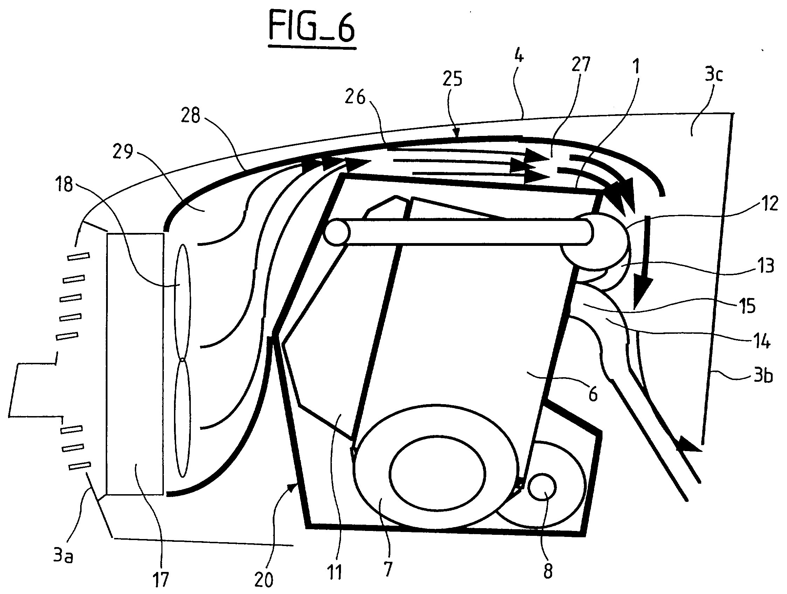

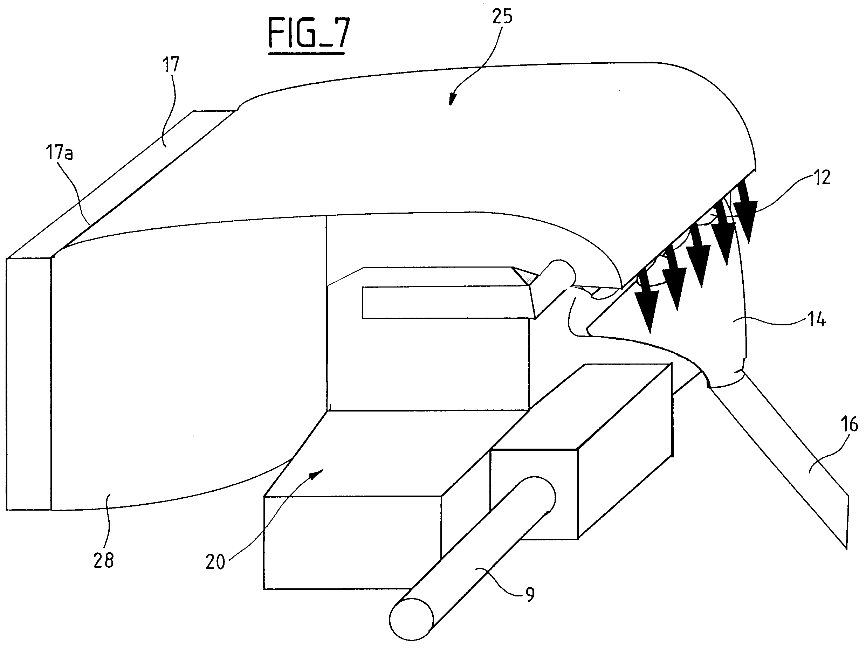

En se reportant aux figures 6 et 7, on voit que le carter 25 est prolongé vers l'avant par un carter 28 dont le bord périphérique avant rejoint, avec interposition d'un joint souple 17a, le bord périphérique arrière du radiateur 17 de manière à constituer un conduit d'air 29 dans lequel s'étend le ventilateur 18, ce conduit d'air 29 rejoignant, à la partie avant supérieure du caisson 20, le conduit d'air 27 déterminé par le carter 25.

Ainsi, tout l'air de refroidissement traversant le radiateur 8 se trouve guidé jusqu'à l'arrière du caisson 20, en passant par dessus ce dernier, pour aller refroidir le collecteur d'admission 12 et le collecteur d'échappement 14.

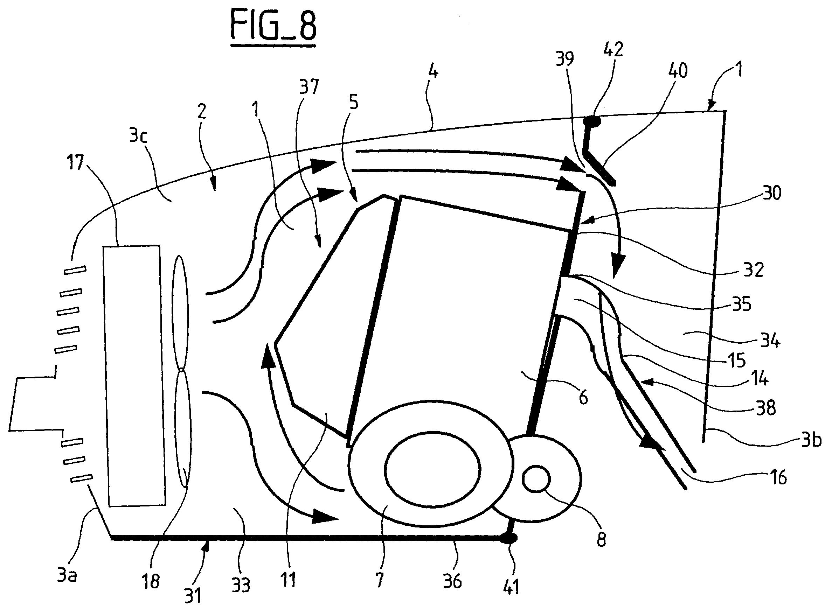

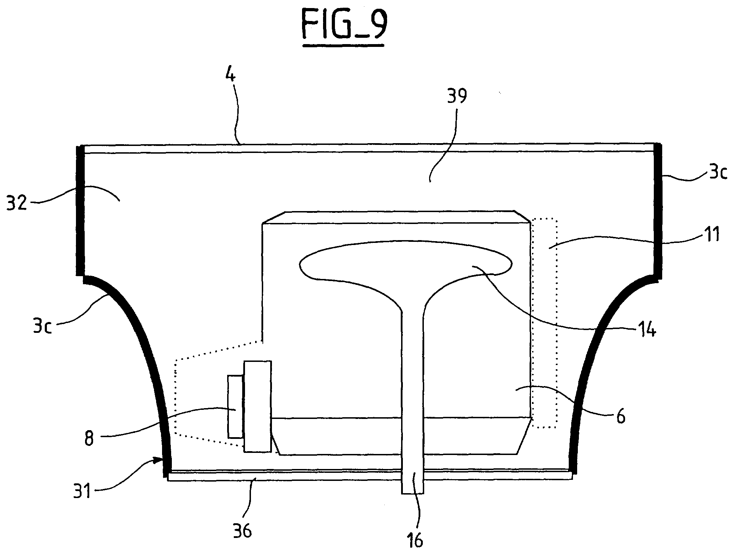

En se reportant maintentant aux figures 8 et 9, on voit que l'on a représenté, de façon identique aux exemples précédents, le compartiment 2 d'un véhicule 1 recevant un groupe motopropulseur 5, équipé cependant d'un dispositif d'encapsulage acoustique 30 différent de ceux décrits précédemment.

Ce dispositif d'encapsulage 30 comprend un caisson d'isolation acoustique 31 qui comprend une cloison transversale 32 qui divise le compartiment 2 en une partie avant 33 et une partie arrière 34 et qui passe sensiblement verticalement en arrière du bloc moteur 6 et en avant du collecteur d'échappement 14 du groupe motopropulseur 5. Cette cloison 32 présente un passage 35 au travers duquel s'étend le conduit de liaison 15 du collecteur d'échappement 14 au bloc moteur 6.

La cloison 32 s'étend latéralement jusqu'aux flancs 3c du compartiment 2, vers le haut jusqu'au capot 4 de ce compartiment et vers le bas jusqu'au bas de ce compartiment.

Le caisson d'isolation acoustique 31 comprend en outre une cloison horizontale inférieure 36 qui rejoint la partie inférieure de la paroi avant 3a du compartiment 2 et le bord inférieur de la cloison verticale 32 et qui s'étend latéralement pour rejoindre les flancs 3c du compartiment 2.

Le caisson 31 est ainsi complété par la paroi avant 3a du compartiment 2 et par les parties des flancs 3c du compartiment 2 et du capot 4 situées en avant de la cloison verticale 32.

Ainsi, tel qu'il vient d'être décrit, le caisson d'isolation acoustique 31 renferme un premier ensemble 37 d'éléments fonctionnels du groupe motopropulseur 5, constitué par le bloc moteur 6, la boîte de vitesses 7, la sortie de transmission 8, le bloc de distribution et d'accessoires 11, le radiateur 17 et son ventilateur 18, tandis qu'un second ensemble 38 d'éléments fonctionnels du groupe motopropulseur 5, constitué principalement par le collecteur d'échappement 14 et la ligne d'échappement 16, est disposé à l'extérieur du caisson d'isolation acoustique 31, dans la partie arrière 34 du compartiment 2 ouverte vers le bas.

Par ailleurs, la partie supérieure de la cloison verticale 32 du caisson 31 présente une ouverture ou fente 39 qui permet de mettre en communication la partie avant 33 du compartiment 2, déterminée par l'intérieur du caisson d'isolation acoustique 31, avec la partie arrière 34 de ce compartiment 2.

Ainsi, l'air de refroidissement introduit à l'intérieur du caisson d'isolation acoustique 31, au travers de la paroi avant 3 du compartiment 2 et du radiateur 17 est brassé à l'intérieur de ce caisson 31 autour du premier ensemble 37 d'éléments fonctionnels du groupe motopropulseur 5 et s'en échappe au travers de l'ouverture 39 de la cloison verticale 32 pour ensuite s'écouler vers le bas en étant guidé par les parois de la partie arrière 34 du compartiment 2 et s'en échapper par son ouverture inférieure, l'air circulant ainsi autour du collecteur d'échappement 14 et de la première partie de la ligne d'échappement 16 pour les refroidir.

Il est de plus avantageux d'équiper la cloison 32 d'un volet 40 actionnable par un moyen de réglage ou de régulation, susceptible de régler ou de réguler le flux d'air de refroidissement traversant l'ouverture 39 de la cloison 32.

Par ailleurs, il est avantageux de fixer la cloison verticale 32 au bloc moteur 6 par tout moyen approprié non représenté et en conséquence de prévoir un joint souple 41 dans la zone de liaison de la cloison verticale 32 et de la cloison horizontale 36, un joint souple 42 sur le bord supérieur de la cloison verticale 32, sur lequel vient en appui le capot 4 et des joints souples non représentés entre la cloison verticale 32 et les flancs 3c du compartiment 2 afin d'absorber les mouvements relatifs du moteur par rapport à la caisse du véhicule.

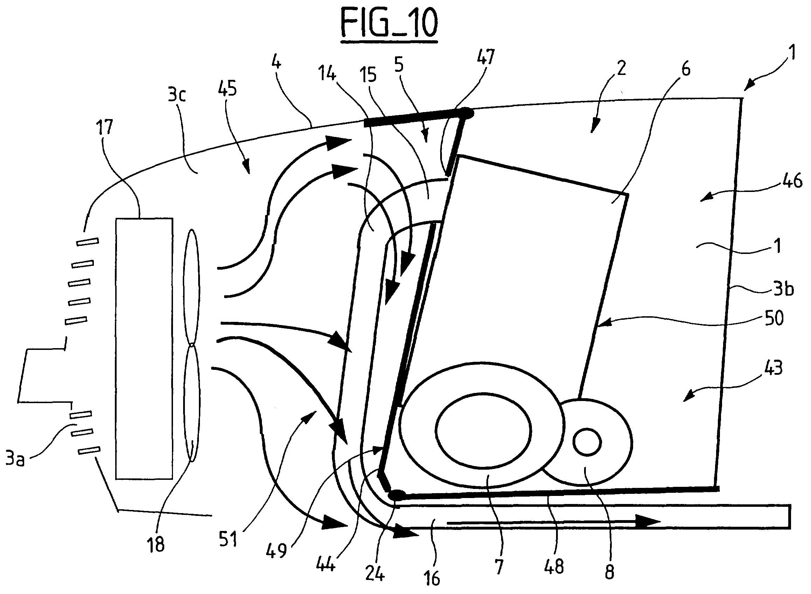

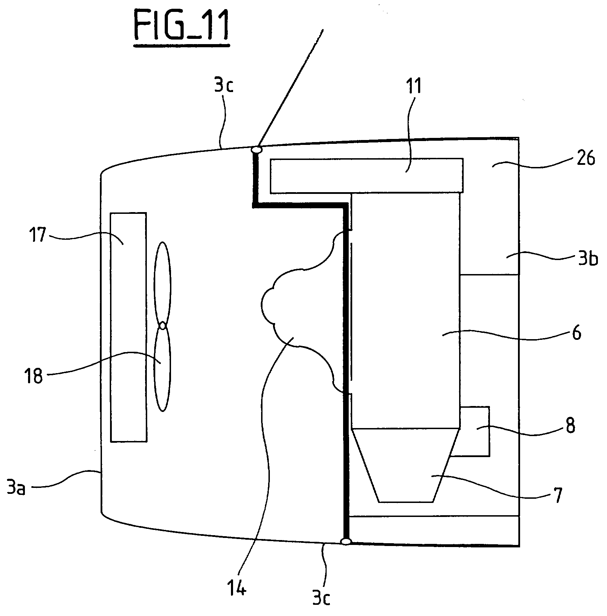

En se reportant maintenant aux figures 10 et 11, on voit qu'on a représenté un groupe motopropulseur 5 disposé dans un compartiment 2 d'un véhicule 1, qui se différencie des groupes motopropulseurs précédents par le fait que son collecteur d'échappement 14 est disposé en avant de son bloc moteur 6, la ligne d'échappement 16 s'étendant vers le bas à partir du collecteur d'échappement 14 et passant en-dessous et à distance de sa boîte de vitesses 7 pour s'étendre vers l'arrière.

Comme dans l'exemple décrit en référence aux figures 8 et 9, le groupe motopropulseur 5 est équipé d'un dispositif d'encapsulage acoustique 43 qui comprend une cloison sensiblement verticale 44 qui divise le compartiment 2 en une partie avant 45 et une partie arrière 46.

Cette fois cependant, la cloison verticale 44 s'étend en avant du bloc moteur 6 et en arrière du collecteur d'échappement 14, cette cloison 44 présentant un passage 47 au travers duquel s'étend la liaison 15 entre le collecteur d'échappement 14 et le bloc moteur 6.

Dans cet exemple, le dispositif d'encapsulage 43 comprend en outre une paroi horizontale inférieure 48 qui s'étend depuis le bord inférieur de la cloison 44 jusqu'au bord inférieur de la paroi arrière 3b du compartiment 2 et qui passe en-dessous de la boîte de vitesses 7 et de la sortie de transmission 8, la ligne d'échappement 16 s'étendant en avant de la cloison verticale 44 et en-dessous de la cloison inférieure 48.

Ainsi, la cloison verticale 44, la cloison inférieure 48, la paroi arrière 3 du compartiment 2 et les parties du capot 4 et des flancs 3c du compartiment 2, situées en arrière de la cloison 44, déterminent un caisson d'isolation acoustique 49 à l'intérieur duquel est enfermé un premier ensemble 50 d'éléments fonctionnels du groupe motopropulseur 5 constitué par le bloc moteur 6, la boîte de vitesses 7 et la sortie de transmission 8, tandis qu'un second ensemble 51 d'éléments fonctionnels du groupe motopropulseur 5 constitués par le collecteur d'échappement 14, la ligne d'échappement 16, le radiateur 17 et son ventilateur 18 sont à l'extérieur de ce caisson d'isolation acoustique 49.

Par ailleurs, les parois de la partie avant 45 du compartiment 2 constituent des moyens de guidage et d'amenée d'air tels que l'air peut circuler dans cette partie 45 autour du collecteur d'échappement 14 et du début de la ligne d'échappement 16 pour les refroidir et s'en échapper par sa partie inférieure.

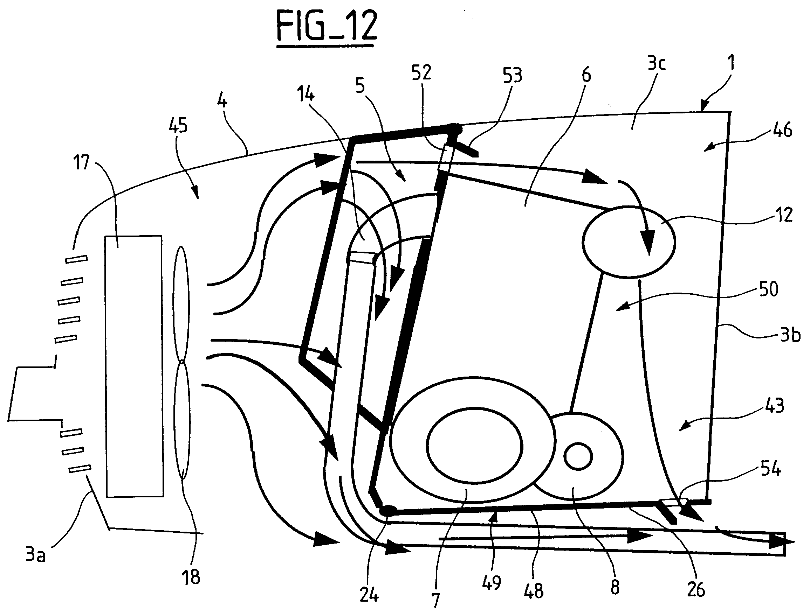

En se reportant maintenant à la figure 12, on voit qu'on a représenté une variante 52 du dispositif d'encapsulage acoustique 43, selon laquelle la partie supérieure de la cloison verticale 44 présente un passage ou fente 52 qui permet de mettre en communication la partie avant 45 du compartiment 2 avec sa partie arrière 46 déterminant le caisson d'isolation acoustique 49, le courant d'air traversant cette fente 52 pouvant être réglé ou régulé par exemple par un volet 53 associé à des moyens d'actionnement non représentés.

De plus, la partie arrière de la cloison inférieure 48 du caisson 49 présente un passage ou fente 54 de sortie d'air.

Ainsi, une partie de l'air brassé dans la partie avant 45 du compartiment 2 peut traverser la fente 52 de la cloison verticale 44 pour circuler à l'intérieur du caisson 49 et s'en échapper par la fente 54 de sa paroi inférieure 48. L'air circulant à l'intérieur du caisson 49 peut avantageusement servir au refroidissement du premier ensemble 50 précité d'éléments fonctionnels du groupe motopropulseur 5, et en particulier au refroidissement de son collecteur d'admission 12 disposé dans cet exemple à l'intérieur du caisson 49.

Les caissons d'isolation acoustiques 20, 31 et 49 tels que définis et délimités précédemment peuvent avantageusement comprendre une peau extérieure rigide, par exemple une tôle et une couche intérieure en un matériau acoustiquement absorbant ou amortissant, tel qu'une couche bitumeuse et une couche de mousse de mélamine pour les zones proches de l'échappement et de mousse de polyuréthane ou un tissu à base de polypropylène et de polyester pour les autres zones.

Par ailleurs, d'une manière générale, il est avantageux de prévoir sur le bord des passages traversants précités de la paroi desdits caissons des joints souples d'étanchéité acoustique non représentés sur les figures.

Bien que les caissons précités aient été plus spécialement décrits en référence à des moteurs montés transversalement, des caissons équivalents pourraient naturellement être associés à des moteurs montés longitudinalement.

## Revendications

1. Dispositif d'encapsulage acoustique d'un groupe motopropulseur (5) d'un véhicule automobile disposé dans un compartiment de ce véhicule et comprenant une multiplicité d'éléments fonctionnels sélectivements reliés par des moyens de liaison, caractérisé par le fait qu'il comprend un caisson d'isolation acoustique (20, 31, 49) dont la paroi entoure un premier ensemble (21) d'éléments fonctionnels dudit groupe, comprenant le bloc moteur (6), la boite de vitesses (7) et le bloc (11) de distribution et d'accessoires fixé au bloc moteur dudit groupe motopropulseur, de telle sorte qu'un second ensemble (22) d'autres éléments fonctionnels dudit groupe sont à l'extérieur dudit caisson, et présente des moyens de passage (24) au travers desquels s'étendent les moyens de liaison (15) des éléments fonctionnels dudit premier ensemble aux éléments fonctionnels dudit second ensemble, et qu'il comprend des moyens (3b, 3c, 4, 25) de guidage d'air permettant d'amener et de faire circuler de l'air de refroidissement autour d'au moins un élément fonctionnel (14) dudit second ensemble (22), extérieurement audit caisson.

2. Dispositif selon la revendication 1, caractérisé par le fait que ledit second ensemble (22) comprend le collecteur d'échappement (14) dudit groupe et la ligne d'échappement (16) qui lui est reliée, la paroi dudit caisson (20a, 32, 44) comprenant une cloison traversée par les moyens de liaison de ce collecteur d'échappement audit premier ensemble d'éléments fonctionnels, et que lesdits moyens de guidage d'air permettent d'amener et de faire circuler de l'air de refroidissement autour dudit collecteur d'échappement.

3. Dispositif selon l'une des revendications 1 et 2, caractérisé par le fait que ledit second ensemble (22) comprend le collecteur d'admission (12) dudit groupe, la paroi dudit caisson comprenant une cloison (20a, 32, 44) traversée par les moyens de liaison de ce collecteur d'admission audit premier ensemble d'éléments fonctionnels, et que lesdits moyens de guidage d'air permettant d'amener et de faire circuler de l'air de refroidissement autour dudit collecteur d'admission.

4. Dispositif selon l'une des revendications 2 et 3, caractérisé par le fait que ladite cloison (32, 44) divise ledit compartiment en deux parties dont l'une renferme ledit premier ensemble d'éléments fonctionnels et constitue ledit caisson et dont l'autre contient ledit second ensemble d'éléments fonctionnels.

5. Dispositif selon l'une quelconque des revendications précédentes caractérisé par le fait qu'une paroi inférieure (36, 48) de la paroi dudit caisson forme une paroi inférieure dudit compartiment.

6. Dispositif selon l'une quelconque des revendications précédentes caractérisé par le fait que lesdits moyens de guidage d'air de refroidissement comprennent au moins un passage (39, 52) ménagé au travers de ladite cloison et mettant en communication les deux parties précitées dudit compartiment, en amont dudit second ensemble d'éléments fonctionnels, la partie renfermant ledit premier ensemble d'éléments fonctionnels comprenant une ouverture de sortie d'air.

7. Dispositif selon la revendication 6, caractérisé par le fait que lesdits moyens de guidage d'air de refroidissement comprennent des moyens (40, 53) de réglage ou de régulation de l'écoulement d'air au travers dudit passage de communication.

8. Dispositif selon l'une quelconque des revendications précédentes caractérisé par le fait que la paroi dudit caisson comprend une couche extérieure rigide et au moins une couche intérieure en un matériau acoustisuement isolant ou amortisseur.

9. Dispositif selon l'une quelconque des revendications précédentes caractérisé par le fait que lesdits moyens de passage comprennent des moyens d'étanchéité acoustique.
